(19) Europäisches Patentamt
European Patent Office
Office européen des brevets

(11) **EP 2 141 510 B1**

(12) **EUROPÄISCHE PATENTSCHRIFT**

(45) Veröffentlichungstag und Bekanntmachung des Hinweises auf die Patenterteilung:
**31.08.2011 Patentblatt 2011/35**

(51) Int Cl.:
*G01S 13/38* *(2006.01)*    *G01S 13/93* *(2006.01)*
*G01S 13/58* *(2006.01)*    *G01S 13/34* *(2006.01)*

(21) Anmeldenummer: **09008671.1**

(22) Anmeldetag: **02.07.2009**

(54) **Betriebsverfahren für ein Radargerät eines Fahrzeugs, in dem eine frequenzmodulierte Frequenzumtastung verwendet wird**

Operating method for a vehicle's radar device in which frequency-modulated frequency keying is used

Procédé de fonctionnement pour un appareil de radar d'un véhicule dans lequel une manipulation de fréquence modulée en fréquence est utilisée

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **03.07.2008 DE 102008031595**

(43) Veröffentlichungstag der Anmeldung:
**06.01.2010 Patentblatt 2010/01**

(73) Patentinhaber: **Hella KGaA Hueck & Co.**
**59552 Lippstadt (DE)**

(72) Erfinder:
• **Becker, Andreas, Dr.**
**59556 Lippstadt (DE)**

• **Hesse, Thomas, Dr.**
**33098 Paderborn (DE)**
• **von Rhein, Andreas, Dr.**
**59558 Lippstadt (DE)**
• **Warsitz, Ernst**
**33098 Paderborn (DE)**

(56) Entgegenhaltungen:
**EP-A- 1 925 948    WO-A-02/31529**
**WO-A-03/048801    WO-A-2007/014333**

• **LISSEL E ET AL: "Radar sensor for car applications" VEHICULAR TECHNOLOGY CONFERENCE, 1994 IEEE 44TH STOCKHOLM, SWEDEN 8-10 JUNE 1994, NEW YORK, NY, USA, IEEE, 8. Juni 1994 (1994-06-08), Seiten 438-442, XP010123080 ISBN: 978-0-7803-1927-1**

EP 2 141 510 B1

**Beschreibung**

Die vorliegende Erfindung bezieht sich auf ein Betriebsverfahren für ein Radargerät eines Fahrzeugs, in dem eine frequenzmodulierte Frequenzumtastung verwendet wird.

Ein derartiges Betriebsverfahren ist beispielsweise bereits aus dem Dokument WO 2004/053521 A1 bekannt. Bei dem bekannten Verfahren erfolgt ein alternierendes Aussenden eines Signals A mit einer Frequenz $f_A$ für eine Zeitdauer $T_A$, eines Signals B mit einer Frequenz $f_B$ für eine Zeitdauer $T_B$ und eines Signals C mit einer Frequenz $f_c$ für eine Zeitdauer Tc während einer Messzeitdauer $T_{Folge2}$ in Richtung eines Zielobjekts, wobei die Gesamtheit der Signale A dabei die Folge 2A, die Gesamtheit der Signale B die Folge 2B und die Gesamtheit der Signale C die Folge 2C bilden.

Nach Ablauf der Messzeitdauer $T_{Folge2}$ erfolgt bei dem bekannten Verfahren ein alternierendes Aussenden des Signals A mit der Frequenz $f_A$ für die Zeitdauer $T_A$, des Signals B mit der Frequenz $f_B$ für die Zeitdauer $T_B$ und beispielsweise des Signals A mit der Frequenz $f_A$ für die Zeitdauer $T_A$ während einer Messzeitdauer $T_{Folge1}$ in Richtung des Zielobjekts, wobei die Gesamtheit der Signale A dabei die Folge 1A, die Gesamtheit der Signale B die Folge 1 B und die Gesamtheit der Signale A die Folge 1A' bilden.

Anschließend erfolgt die Bestimmung der Relativgeschwindigkeit und des Abstands des Zielobjekts bezogen auf das Fahrzeug durch die Auswertung der Sende- und Empfangssignale der Folgen 1A, 1B, 1A' und 2A, 2B, 2C.

Ein Betriebsverfahren gemäß dem Oberbegriff des Anspruchs 1 ist beispielsweise bereits aus dem Dokument WO 02/31529 A2 bekannt. Bei dem bekannten Verfahren erfolgt ein alternierendes Aussenden eines Signals A mit einer Frequenz $f_A$ für eine Zeitdauer $T_A$ und eines Signals B mit einer Frequenz $f_B$ für eine Zeitdauer $T_B$ während einer Messzeitdauer $T_{Folge\,2}$ in Richtung eines Zielobjekts, wobei die Gesamtheit der Signale A dabei die Folge 2A und die Gesamtheit der Signale B die Folge 2B bilden.

Weitere, ähnliche Verfahren sind in den Dokumenten WO 2007/014333 A2 und EP 1 925 948 A1 sowie in dem Aufsatz "Radar sensor for car applications" in dem Konferenzband zur Vehiclar Technology Conference, 1994, Stockholm, Sweden, ISBN 978-0-7803-1927-1 offenbart.

Die bekannten Verfahren sollen dazu dienen, den bei Betriebsverfahren für Radargeräte, in denen eine frequenzmodulierte Frequenzumtastung verwendet wird, üblichen Nachteil von Uneindeutigkeiten bei der Auswertung zu vermeiden. Die frequenzmodulierte Frequenzumtastung wird auch als frequenzmoduliertes frequency shift keying, kurz FMFSK, bezeichnet.

Im Straßenverkehr, insbesondere bei Autobahnfahrten, kann es vorkommen, dass die Relativgeschwindigkeit zwischen einem mit einem derartigen Radargerät bestückten Fahrzeug und einem Zielobjekt, beispielsweise einem weiteren Fahrzeug, derart hoch ist, dass eine ausreichende Geschwindigkeitseindeutigkeit nicht mehr gegeben ist. Zwar ist es möglich, durch die Erniedrigung der Abtastzeit, also der Zeitdauer, die zwischen zeitlich direkt aufeinander folgenden Empfangssignalmessungen der gleichen Sendefrequenz oder des gleichen Sendefrequenzverlaufs liegt, den Wert für eine maximale Relativgeschwindigkeit, für die die Geschwindigkeitseindeutigkeit noch ausreichend ist, zu erhöhen. Allerdings hätte die Erniedrigung der Abtastzeit bei dem bekannten Verfahren den Nachteil, dass die Messzeitdauer, also die Zeitdauer für einen vollständigen Messdurchlauf, bei ansonsten gleichen Bedingungen ebenfalls erniedrigt würde, was wiederum zu einer ungewünschten Verschlechterung der Geschwindigkeitsauflösung führen würde. Ein weiterer Nachteil dabei ist, dass die Erniedrigung der Abtastzeit, also eine schnellere Abtastung, eine teurere Hardware bedingt.

Ferner ist es, zum Beispiel aus dem Dokument WO 03/048801 A1 bekannt, die Messzeitdauer zum Erreichen einer gewünschten höheren Geschwindigkeitsauflösung zu erhöhen, dieses wird aber durch eine Verlängerung der einzelnen Signalfolgen erreicht und geht zu Lasten der Eindeutigkeit.

Hier setzt die Erfindung an.

Der vorliegenden Erfindung liegt die Aufgabe zugrunde, ein Betriebsverfahren für ein Radargerät eines Fahrzeugs, in dem eine frequenzmodulierte Frequenzumtastung verwendet wird, anzugeben, bei dem eine ausreichende Geschwindigkeitseindeutigkeit auch bei höheren Relativgeschwindigkeiten zwischen dem das Radargerät tragenden Fahrzeug und einem Zielobjekt gegeben ist und gleichzeitig die Güte der Geschwindigkeitsauflösung im Wesentlichen erhalten bleibt.

Diese Aufgabe wird durch ein Betriebsverfahren mit den Merkmalen des Anspruchs 1 gelöst. Die Unteransprüche betreffen vorteilhafte Weiterbildungen der Erfindung.

Ein wesentlicher Vorteil des erfindungsgemäßen Betriebsverfahrens liegt insbesondere darin, dass eine ausreichende Geschwindigkeitseindeutigkeit auch bei höheren Relativgeschwindigkeiten zwischen dem das Radargerät tragenden Fahrzeug und einem Zielobjekt gegeben ist und gleichzeitig die Güte der Geschwindigkeitsauflösung im Wesentlichen erhalten bleibt. Ferner ist dies ohne eine teurere Hardware erreicht.

Grundsätzlich ist die Auswertung der Empfangssignale nach Art und Zeitpunkt sowie Zeitdauer in weiten geeigneten Grenzen frei wählbar. Zweckmäßigerweise werden die Empfangssignale der Folgen 1A, 2A, 2B und 1A-2A bei der Auswertung jeweils mittels einer Fourier-Transformation, insbesondere einer Hochgeschwindigkeits-Fourier-Transformation, kurz FFT, umgewandelt. Vorteilhafterweise wird dabei nur jedes zweite Signal A der Folge 1A bei der Transformation der zusammengefassten Folge 1 A-2A verwendet.

Eine vorteilhafte Weiterbildung der vorgenannten Ausführungsform sieht vor, dass in einem ersten Schritt nur die transformierten Empfangssignale der Folge 1A zur Bestimmung der Geschwindigkeit verwendet und in einem nachfolgenden zweiten Schritt der dazu korrespondierende Peak der Folge 1A zur Feststellung von Aliasingeffekten mit den diesem Peak entsprechenden Peaks der transformierten Empfangssignale der Folgen 2A, 2B und 1A-2A verglichen wird. Hierdurch ist es zum einen möglich, mittels des ersten Schritts sehr schnell eine Geschwindigkeitsabschätzung bei ausreichend guter Geschwindigkeitseindeutigkeit und grober Geschwindigkeitsauflösung vorzunehmen. Durch den zweiten Schritt, kann dann die Geschwindigkeitsauflösung auf das gewünschte Gütemaß verbessert werden. Gleichzeitig kann durch den zweiten Schritt überprüft werden, ob Aliasingeffekte vorliegen. Für Zielobjekte, für die dies der Fall ist, kann dann keine Abstandsbestimmung vorgenommen werden, es sei denn, die Amplitudenhöhen der sich überlappenden Peaks der einzelnen Zielobjekte weisen sehr unterschiedliche Amplitudenhöhen auf.

Eine weitere vorteilhafte Weiterbildung sieht vor, dass aus den Phasenunterschieden der Peakpositionen der transformierten Folgen 2A und 2B der Abstand vom Fahrzeug zum Zielobjekt ermittelt wird. Auf diese Weise ist neben einer Information über die Relativgeschwindigkeit zwischen Fahrzeug und Zielobjekt auch eine Information über deren Abstand zueinander erhältlich.

Anhand der beigefügten, grob schematischen Zeichnung wird die Erfindung nachfolgend näher erläutert. Dabei zeigt die einzige

Fig.    ein Ausführungsbeispiel in einem Frequenz-Zeit-Diagramm.

Im Nachfolgenden wird ein Ausführungsbeispiel des erfindungsgemäßen Betriebsverfahrens anhand der Fig. näher erläutert.

Der Aufbau eines Radargeräts zur Durchführung des erfindungsgemäßen Verfahrens sowie dessen grundsätzliche Funktionsweise sind dem Fachmann wohl bekannt, so dass diesbezüglich auf die bereits in der Beschreibungseinleitung zitierte WO 2004/053521 A1 verwiesen werden kann.

Das erfindungsgemäße Betriebsverfahren für ein Radargerät eines Fahrzeugs, in dem eine frequenzmodulierte Frequenzumtastung, kurz FMFSK, verwendet wird, weist hier die folgenden Schritte auf:

Bei jedem Messdurchlauf wird zunächst während einer Messzeitdauer $T_{Folge\ 1A}$ eine Folge 1A von dem Radargerät in Richtung des Zielobjekts, beispielsweise eines weiteren Fahrzeugs, ausgesendet. Bei dem ausgesendeten Signal handelt es sich hier um einen sogenannten Doppler-Chirp mit der Frequenz $f_A$, der wiederholt für eine Zeitdauer $T_A$ ausgesendet wird. Da hier die Zeitdauer $T_A$ der sogenannten Abtastzeit $T_{Abtast,\ Folge\ 1A}$ entspricht, erfolgt jeweils nach Ablauf der Zeitdauer $T_A$ das Abtasten, also die Messung des Empfangssignals des von dem Zielobjekt in Richtung des Radargeräts reflektierten Signalechos der gleichen Sendefrequenz. Die Abtastzeitpunkte sind in der Fig. durch Punkte am Ende jeder Zeitdauer $T_A$ dargestellt, wobei die Zeitdauer eines Signals, hier A, allgemein auch als $T_{Burst}$ bezeichnet wird. Bei dem vorliegenden Ausführungsbeispiel sind die konkreten Werte wie folgt:

- Anzahl der Signale A während der Messzeitdauer $T_{Folge\ 1A}$: N = 512
- $T_{Burst} = T_A = T_{Abtast,\ Folge\ 1A} = 25\ \mu s$
- Messzeitdauer $T_{Folge\ 1A} = N * T_{Burst}$
- Trägerfrequenz = $f_c$ = 24 GHz

Durch die Verwendung der Folge 1A für die Auswertung ergibt sich für die Geschwindigkeitseindeutigkeit

$$v_{max} = \frac{\pm c_0}{4\, f_c\, T_{Abtast,\ Folge\ 1}} \approx \pm 125{,}0\, m/s \approx \pm 450\, km/h \tag{1}$$

mit

$c_0$ = Lichtgeschwindigkeit in Luft, $f_c$ = 24 GHz, $T_{Abtast,\ Folge\ 1A} = T_{Abtast,\ Folge\ 1} = 1* T_{Burst}$.

Das heißt, dass bis zu einer maximalen Relativgeschwindigkeit von 450 km/h eine für die Anwendung bei Fahrzeugen, insbesondere bei Personen- und Lastkraftwagen, ausreichende Geschwindigkeitseindeutigkeit existiert.

Für die Geschwindigkeitsauflösung ergibt sich

$$\Delta v \quad = \frac{c_0}{2 f_c T_{Mess, Folge1}} \approx 0,49 \, m/s \approx 1,8 \, km/h \tag{2}$$

mit

$c_0$ = Lichtgeschwindigkeit in Luft, $f_c$ = 24 GHz, $T_{Folge\ 1A}$ = N* $T_{Burst}$.

Nach Ablauf der Messzeitdauer $T_{Folge\ 1A}$ erfolgt hier während einer Messzeitdauer $T_{Folge\ 2}$ ein alternierendes Aussenden des Signals A mit der Frequenz $f_A$ für die Zeitdauer $T_A$ und eines Signals B mit einer Frequenz $f_B$ für eine Zeitdauer $T_B$ in Richtung des Zielobjekts, wobei die Gesamtheit der Signale A dabei die Folge 2A und die Gesamtheit der Signale B dabei die Folge 2B bilden. Bei den ausgesendeten Signalen A, B handelt es sich hier wiederum um Doppler-Chirps. Die Zeitdauer eines Signals, hier A oder B, ist hier gleich lang. Die Abtastzeitpunkte sind in der Fig. analog zur Folge 1A durch Punkte am Ende jeder Zeitdauer $T_A$ und $T_B$ dargestellt. Bei dem vorliegenden Ausführungsbeispiel sind die konkreten Werte für die Messzeitdauer $T_{Folge\ 2}$ eie folgt:

- Anzahl der Signale A während der Messzeitdauer $T_{Folge\ 2}$: N = 512
- Anzahl der Signale B während der Messzeitdauer $T_{Folge\ 2}$: N = 512
- $T_{Burst} = T_A = T_B = 25 \, \mu s$
- $T_{Abtast,\ Folge\ 2} = T_A + T_B = 2 * T_{Burst}$
- Messzeitdauer $T_{Folge\ 2} = 2 * N * T_{Burst}$
- Trägerfrequenz = $f_c$ = 24 GHz

Nach dem Empfang der von dem Zielobjekt reflektierten Signalechos erfolgt die automatische Bestimmung der Relativgeschwindigkeit und des Abstands des Zielobjekts bezogen auf das Fahrzeug durch die Auswertung der Sende- und Empfangssignale der Folgen 1A, 2A und 2B, wobei die Empfangssignale der Folgen 1A und 2A erfindungsgemäß bei der Auswertung zu einer zusätzlichen Folge 1A-2A zusammengefasst werden. In der Fachsprache wird dabei von merging gesprochen. Da die Folge 1 A hier vor der Folge 2, mit den beiden Folgen 2A und 2B, gesendet wird, ist die Auswertung der Folge 1A bereits während des Sendens der Folge 2 möglich.

Hierdurch ergeben sich für die zusammengefasste Folge 1A-2A die folgenden konkreten Werte:

- Anzahl der Signale A während der Messzeitdauer $T_{Folge\ 1A-2A}$: 2*N = 2*512
- $T_{Burst} = T_A = 25 \, \mu s$
- $T_{Abtast,\ Folge\ 1A-2A} = T_A + T_A = 2 * T_{Burst}$
- Messzeitdauer $T_{Folge\ 1A-2A} = 3 * N * T_{Burst}$
- Trägerfrequenz = $f_c$ = 24 GHz

Um die Abtastabstände zwischen den beiden Bestandteilen der nun neuen Folge 1A-2A für die weitere Auswertung gleichzuhalten, wird aus der Folge 1 lediglich jeder zweite Signalwert A verwendet, so dass sich hier für die Folge 1A-2A 1*N + ½*N = 1,5*N Signalwerte ergeben. Da hier für die Auswertung der einzelnen Folgen 1A, 2A, 2B und 1A-2A jeweils eine Hochgeschwindigkeits-Fourier-Transformation, kurz FFT, verwendet wird, muss die Folge 1A-2A bis 2*N mit Nullen aufgefüllt werden; dieser Vorgang wird in der Fachsprache als Zero-Padding bezeichnet. Die Messzeitdauer der Folge 1A-2A von 3*N*$T_{Burst}$ ist leicht aus der Fig. ersichtlich; sie entspricht der Summe der Messzeitdauern $T_{Folge\ 1A}$ und $T_{Folge\ 2}$.

Durch die Verwendung dieser neuen Folge 1A-2A für die Auswertung ergibt sich demnach für die Geschwindigkeitseindeutigkeit

$$v_{max} = \frac{\pm c_0}{4 f_c T_{Abtast, Merged}} \approx \pm 62,5 \, m/s \approx \pm 225 \, km/h \tag{3}$$

mit

$c_0$ = Lichtgeschwindigkeit in Luft, $f_c$ = 24 GHZ, $T_{Abtast,\ Folge\ 1A-2A} = T_{Abtast,\ Merged} = 2 * T_{Burst}$.

Für die Geschwindigkeitsauflösung ergibt sich

$$\Delta v \quad := \frac{c_0}{2 f_c \, T_{Mess, Merged}} \approx 0,16 \, m/s \approx 0,6 \, km/h \tag{4}$$

mit

$c_0$=Lichtgeschwindigkeit in Luft, $f_c$=24 GHz, $T_{Folge\ 1A-2A}$ =3*N * $T_{Burst}$.

Aus der Zusammenschau der Gleichungen 1 bis 4 ergibt sich, dass mit der Auswertung der Folge 1 eine Geschwindigkeitsbestimmung mit einer ausreichenden Geschwindigkeitseindeutigkeit auch für hohe Relativgeschwindigkeiten zwischen Fahrzeug und Zielobjekt, beispielsweise zwei Personenkraftwagen, ermöglicht ist. Allerdings ist die Geschwindigkeitsauflösung bei der Auswertung der Folge 1 von geringer Güte.

Im Unterschied dazu liegt die maximale Geschwindigkeit für eine noch ausreichende Geschwindigkeitseindeutigkeit bei der Auswertung der zusammengefassten Folge 1A-2A niedriger, bei gleichzeitig höherer und damit besserer Geschwindigkeitsauflösung.

Deshalb werden bei der automatischen Bestimmung der Relativgeschwindigkeit und des Abstands des Zielobjekts bezogen auf das Fahrzeug hier in einem ersten Schritt nur die transformierten Empfangssignale der Folge 1A für die Bestimmung der Geschwindigkeit herangezogen. Anschließend wird dann in einem zweiten Schritt der dazu korrespondierende Peak der Folge 1 A zur Feststellung von Aliasingeffekten mit den diesem Peak entsprechenden Peaks der transformierten Empfangssignale der Folgen 2A, 2B und 1A-2A verglichen. Wie oben erläutert, kann hierdurch auch die Geschwindigkeitsauflösung verbessert werden; siehe insbesondere die Gleichung 4.

Ferner wird in einem weiteren Schritt aus den Phasenunterschieden der Peakpositionen der transformierten Folgen 2A und 2B auf dem Fachmann bekannte Weise der Abstand vom Fahrzeug zum Zielobjekt ermittelt.

Auch wenn das erfindungsgemäße Verfahren aus Gründen der Übersichtlichkeit anhand eines Fahrzeugs und eines einzigen Zielobjekts, beispielsweise ein weiteres Fahrzeug, erläutert worden ist, ist für den Fachmann klar, dass das Verfahren auch bei dem Vorhandensein einer Mehrzahl von Zielobjekten vorteilhaft anwendbar ist.

Für Zielobjekte, die sich durch Aliasingeffekte mit anderen Zielobjekten überdecken, können nur die Relativgeschwindigkeiten auf die oben erläuterte Weise bestimmt werden; die Abstände zwischen Fahrzeug und den Zielobjekten nur, wenn sich die Amplituden der dazu korrespondierenden Peaks in deren Höhe sehr stark voneinander unterscheiden.

Durch die Generierung der zusammengefassten Folge 1A-2A sowie deren Auswertung wird der Rechenaufwand im Vergleich zum Stand der Technik nur geringfügig erhöht, wohingegen die Geschwindigkeitseindeutigkeit deutlich gesteigert wird. Der Aufwand für eine aus dem Stand der Technik bekannte Plausibilisierung der Zielobjekte kann deshalb verringert werden; eine Plausibilisierung ist bestenfalls überhaupt nicht mehr erforderlich.

Die Erfindung ist nicht auf das vorliegende Ausführungsbeispiel begrenzt. Beispielsweise ist das erfindungsgemäße Betriebsverfahren neben den Doppler-Chirps auch auf sogenannte Up-Chirps und Down-Chirps sowie beliebige Kombinationen daraus in analoger Weise anwendbar. Entsprechend würde es sich nicht um Sendefrequenzen $f_A$ und $f_B$ sondern um Sendefrequenzverläufe $f_{A(t)}$ und $f_{B(t)}$ handeln. Abweichend von dem Ausführungsbeispiel sind auch voneinander abweichende Zeitdauern $T_A$ und $T_B$ denkbar. Darüber hinaus ist die Sendereihenfolge der Folgen 1A und 2, sowie die der Folgen 2A und 2B innerhalb der Folge 2 auch umkehrbar. Neben der Hochgeschwindigkeits-Fourier-Transformation sind auch andere Fourier-Transformationen und andere dem Fachmann bekannte und geeignete Ausweteverfahren möglich.

Eine andere alternative Ausführungsform sieht vor, dass in einem ersten Schritt nur die transformierten Empfangssignale der Folge 1A-2A zur Bestimmung der Geschwindigkeit verwendet und in einem nachfolgenden zweiten Schritt der dazu korrespondierende Peak der Folge 1A-2A zur Feststellung von Aliasingeffekten mit den diesem Peak entsprechenden Peaks der transformierten Empfangssignale der Folgen 2A, 2B und 1A verglichen wird.

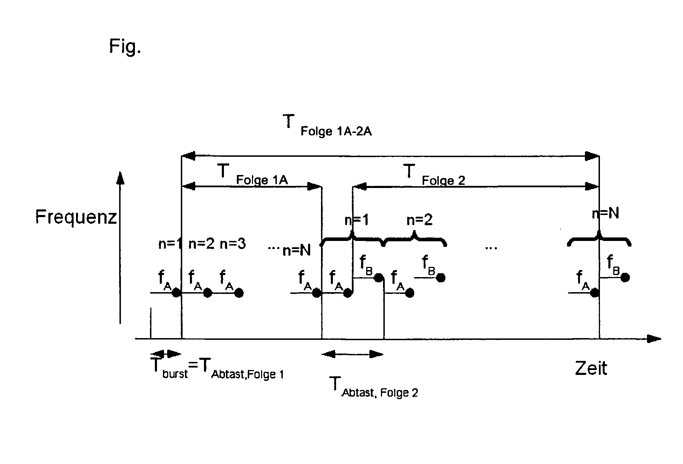

**Patentansprüche**

1. Betriebsverfahren für ein Radargerät eines Fahrzeugs, in dem eine frequenzmodulierte Frequenzumtastung verwendet wird, wobei das Verfahren die folgenden Schritte aufweist:

- ein alternierendes Aussenden eines Signals A mit einer Frequenz $f_A$ oder eines Frequenzverlaufs $f_{A(t)}$ für eine Zeitdauer $T_A$ und eines Signals B mit einer Frequenz $f_B$ oder eines Frequenzverlaufs $f_{B(t)}$ für eine Zeitdauer $T_B$ während einer Messzeitdauer $T_{Folge\ 2}$ in Richtung eines Zielobjekts, wobei die Gesamtheit der Signale A dabei die Folge 2A und die Gesamtheit der Signale B dabei die Folge 2B bilden;
- einen Empfang der von dem Zielobjekt reflektierten Signalechos der während der Messzeitdauer $T_{Folge\ 2}$ gesendeten Signale A und B;

- eine Auswertung der Sende- und Empfangssignale der Folgen 2A und 2B für eine automatische Bestimmung der Relativgeschwindigkeit und des Abstands des Zielobjekts bezogen auf das Fahrzeug,
**gekennzeichnet durch**
- ein wiederholtes Aussenden des Signals A mit der Frequenz $f_A$ oder des Frequenzverlaufs $f_{A(t)}$ für die Zeitdauer $T_A$ während einer Messzeitdauer $T_{Folge\ 1A}$ als Folge 1A in Richtung des Zielobjekts, wobei die Folge 1A zeitlich vor oder nach den beiden Folgen 2A und 2B gesendet wird;
- einen Empfang der von dem Zielobjekt reflektierten Signalechos des während der Messzeitdauer $T_{Folge\ 1A}$ gesendeten Signals A und
- eine Auswertung der Sende- und Empfangssignale der Folgen 1A 2A und 2B für die automatische Bestimmung der Relativgeschwindigkeit und des Abstands des Zielobjekts bezogen auf das Fahrzeug, wobei jedes zweite Empfangssignal der Folge 1A und die Empfangssignale der Folge 2A bei der Auswertung zu einer Folge 1 A-2A zusammengefasst werden.

2. Betriebsverfahren nach Anspruch 1,
**dadurch gekennzeichnet,**
**dass** die Empfangssignale der Folgen 1A, 2A, 2B und der zusammengefassten Folge 1A-2A bei der Auswertung jeweils mittels einer Fourier-Transformation umgewandelt werden, wobei nur jedes zweite Signal A der Folge 1 A bei der Transformation der zusammengefassten Folge 1 A-2A verwendet wird.

3. Betriebsverfahren nach Anspruch 2,
**dadurch gekennzeichnet,**
**dass** in einem ersten Schritt nur die transformierten Empfangssignale der Folge 1 A zur Bestimmung der Geschwindigkeit verwendet und in einem nachfolgenden zweiten Schritt der dazu korrespondierende Peak der Folge 1A zur Feststellung von Aliasingeffekten mit den diesem Peak entsprechenden Peaks der transformierten Empfangssignale der Folgen 2A, 2B und 1A-2A verglichen wird.

4. Betriebsverfahren nach zumindest einem der Ansprüche 2 bis 3,
**dadurch gekennzeichnet,**
**dass** aus den Phasenunterschieden der Peakpositionen der transformierten Folgen 2A und 2B der Abstand vom Fahrzeug zum Zielobjekt ermittelt wird.

**Claims**

1. Operating procedure for a radar device for motor vehicles, in which frequency-modulated frequency shift key radar is applied, and wherein the process comprises the following steps:

- An alternating sending of a signal A with a frequency $f_A$ or of a frequency response curve $f_{A(t)}$ for a time period $T_A$ and of a signal B with a frequency $f_B$ or of a frequency response curve $f_{B(t)}$ for a time period $T_B$ during a measuring period $T_{sequence\ 2}$ in direction of a target, wherein the entirety of the signals A forms sequence 2A and the entirety of the signals B forms sequence 2B;
- A reception of the signal echo of the signals A and B sent during the measuring period $T_{sequence2}$ and reflected by the target;
- And evaluation of the sent and received signals of the sequences 2A and 2B for an automatic determination of the relative speed and the distance of the target relative to the motor vehicle.
**Characterized in that**
- A repeated sending of the signal A with the frequency $f_A$ or the frequency response curve $f_{A(t)}$ for the time period $T_A$ during a measuring period $T_{sequence\ 1A}$ as sequence 1A in direction of the target, wherein the sequence 1A is sent before or after the two sequences 2A and 2B;
- A reception of the signal echoes of the signal A sent during the measuring period $T_{sequence\ 1A}$ and reflected by the target and
- An evaluation of the sent and received signals of the sequences 1A, 2A and 2B for the automatic determination of the relative speed and the distance of the target relative to the motor vehicle, wherein every second received signal of the sequence 1A and the received signals of the sequence 2A are combined to a sequence 1A-2A during the evaluation.

2. Operating procedure following claim 1,
**Characterized in that**

The received signals of the sequences 1A, 2A, 2B and the combined sequence 1A-2A are each transformed by means of a Fourier transformation during the evaluation, herein only every second signal A of the sequence 1A is used during the transformation of the combined sequence 1A-2A.

3. Operating procedure following claim 2
**Characterized in that**
In a first step only the transformed received signals of the sequence 1A are used for the determination of the speed and in a second subsequent step the corresponding peak of the sequence 1A is compared with the peaks of the transformed received signals of the sequences 2A, 2B and 1A-2A for the identification of aliasing effects.

4. Operating procedure following at least one of the claim 2 to 3
**Characterized in that**
The distance from the motor vehicle to the target is determined by the phase differences between the peak positions of the transformed sequences 1A and 2B.

**Revendications**

1. Procédé de fonctionnement pour un appareil de radar d'un véhicule dans lequel une modulation par déplacement de fréquence est utilisée, le procédé présentant les étapes suivantes:

- une émission alternante d'un signal A d'une fréquence $f_A$ ou d'une réponse amplitude/fréquence $f_{A(t)}$ pour une durée $T_A$ et d'un signal B d'une fréquence $f_B$ ou d'une réponse amplitude/fréquence $f_{B(t)}$ pour une durée $T_B$ pendant une durée de mesure $T_{séquence\ 2}$ en direction d'un objet cible, tous les signaux A constituant ainsi la séquence 2A et tous les signaux B constituant ainsi la séquence 2B,
- une réception des échos de signaux reflétés par l'objet cible des signaux A et B émis pendant la durée de mesure $T_{séquence\ 2,}$
- une exploitation des signaux d'émission et de réception des séquences 2A et 2B pour une détermination automatique de la vitesse relative et de la distance de l'objet cible par rapport au véhicule,
**caractérisé par**
- une émission répétée du signal A d'une fréquence $f_A$ ou d'une réponse amplitude/fréquence $f_{A(t)}$ pour la durée $T_A$ pendant une durée de mesure $T_{séquence\ 1A}$ en tant que séquence 1A en direction de l'objet cible, la séquence 1A étant émise avant ou après les deux séquences 2A et 2B,
- une réception des échos de signaux reflétés par l'objet cible du signal A émis pendant la durée de mesure $T_{séquence\ 1A}$ et,
- une exploitation des signaux d'émission et de réception des séquences 1A, 2A et 2B pour la détermination automatique de la vitesse relative et de la distance de l'objet cible par rapport au véhicule, chaque deuxième signal de réception de la séquence 1A et les signaux de réception de la séquence 2A étant regroupés à une séquence 1A-2A pour l'exploitation.

2. Procédé de fonctionnement selon la revendication 1,
**caractérisé en ce que**
les signaux de réception des séquences 1A, 2A, 2B et ceux de la séquence 1A-2A regroupée sont transformés lors de l'exploitation au moyen de la transformation de Fourier, n'utilisant que chaque deuxième signal A de la séquence 1A lors de la transformation de la séquence 1A-2A regroupée.

3. Procédé de fonctionnement selon la revendication 2,
**caractérisé en ce que**
dans un premier pas uniquement les signaux de réception transformés de la séquence 1A sont utilisés pour déterminer la vitesse et dans un deuxième pas subséquent le peak correspondant de la séquence 1A pour déterminer des effets de crénelage (Aliasing) est comparé avec les peaks des signaux de réception transformés des séquences 2A, 2B et 1A-2A, correspondants à ce peak.

4. Procédé de fonctionnement selon au moins une des revendications 2 à 3,
**caractérisé en ce que**
la distance du véhicule à l'objet cible est déterminée à l'aide des différences de phase des positions de pointe (peak positions) des séquences 2A et 2B transformées.

Fig.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004053521 A1
- WO 0231529 A2
- WO 2007014333 A2
- EP 1925948 A1
- WO 03048801 A1

**In der Beschreibung aufgeführte Nicht-Patentliteratur**

- Radar sensor for car applications. dem Konferenzband zur Vehiclar Technology Conference. Stockholm, 1994